(19) Europäisches Patentamt / European Patent Office / Office européen des brevets

(11) EP 2 835 686 A1

(12) EUROPEAN PATENT APPLICATION
published in accordance with Art. 153(4) EPC

(43) Date of publication:
**11.02.2015 Bulletin 2015/07**

(21) Application number: **13764460.5**

(22) Date of filing: **21.03.2013**

(51) Int Cl.:
***G02F 1/167*** *(2006.01)* ***C08J 3/12*** *(2006.01)*
***C08J 3/28*** *(2006.01)* ***G02F 1/17*** *(2006.01)*

(86) International application number:
**PCT/JP2013/057966**

(87) International publication number:
**WO 2013/141270 (26.09.2013 Gazette 2013/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.03.2012 JP 2012064251**

(71) Applicant: **Sakura Color Products Corporation**
**Osaka-shi, Osaka 537-0025 (JP)**

(72) Inventors:
- **KIYOE, Ryuichi**
  **Osaka-shi**
  **Osaka 540-8508 (JP)**
- **INOUE, Hiroshi**
  **Osaka-shi**
  **Osaka 540-8508 (JP)**

(74) Representative: **Müller-Boré & Partner Patentanwälte PartG mbB**
**Friedenheimer Brücke 21**
**80639 München (DE)**

# (54) FINE ELECTRETIC PARTICLES AND PROCESS FOR PRODUCING SAME

(57) The present invention provides fine electret particles comprising, at least in the surface portion of the particles, an electret resin and a polymeric dispersant, the electret resin being a fluorine-containing resin and being electretized by electron ray irradiation, radial ray irradiation, or corona discharge treatment. The fine electret particles are uniformly electrified, and well dispersed in an electrophoretic medium, while exhibiting excellent electrophoretic properties.



Printed by Jouve, 75001 PARIS (FR)

**Description**

Technical Field

The present invention relates to fine electret particles useful as electrophoretic particles used for a full-color electrophoretic display device (i.e., electronic paper). The present invention also relates to a process for producing the fine electret particles.

Background Art

In recent years, electrophoretic display methods, which use the electrophoresis of charged fine particles (fine electret particles), have been attracting attention as the most promising technology for next-generation display devices. However, this technology has many problems, such as the shape of the charged fine particles, small and unstable charge potential (ζ potential), secondary aggregation or sedimentation of electrophoretic particles, inadequate deletion of previously displayed images, and unsatisfactory response speed. Therefore, research and development have been conducted to correct such shortcomings.

Patent Literature 1 and 2 disclose electret particles for the above application.

Patent Literature 1 discloses negatively charged fine particles produced through addition of a resin serving as an electron trap to superfine spherical core resin particles having a particle diameter of 1-10 μm obtained by polymerization of a polymeric fine particle material and through irradiation of the particles with a 10-300 kGy electron beam to form negatively charged fine electret particles, wherein the core resin is colored with a desired color (Claim 1).

Patent Literature 2 discloses colored and negatively charged microparticulates obtained by adding an electron trap material, a pigment, etc., to a polymeric fine particle monomer material; producing spherical fine particles having a particle diameter of 5-10 μm through suspension polymerization, emulsion polymerization, dispersion polymerization, or the like; and forming negatively charged electret microparticulates either by irradiating the particles with a 10-50 kGy electron beam and heating the particles for over ten minutes at 90 to 110°C, or irradiating the particles with a 10-50 kGy electron beam at 90 to 110°C, wherein the negatively charged electret microparticulates are colored with a desired color and have a ζ potential of -50 to -100 mV (Claim 10).

However, electret particles have been often unevenly electrified and thus has a problem of insufficient electrophoretic properties. Further, when the fine electret particles easily aggregate to one another in an electrophoretic medium, insufficient electrophoretic properties also result. Therefore, development of electret particles that can be uniformly electrified, and well dispersed in an electrophoretic medium, while exhibiting excellent electrophoretic properties, has been desired.

Citation List

Patent Literature

PTL 1: JP2005-31189A
PTL 2: JP2007-206570A

Summary of Invention

Technical Problem

An object of the present invention is to provide fine electret particles that can be uniformly electrified, and well dispersed in an electrophoretic medium, while exhibiting excellent electrophoretic properties, and a process for producing the fine electret particles.

Solution to Problem

In order to achieve the above object, the present inventors conducted extensive research and found that the object can be achieved with a fine electret particle obtained by electretizing a specific fine particle or a specific core-shell structure. With this finding, the inventors completed the present invention.

Specifically, the present invention relates to the following fine electret particles and processes for producing the fine electret particles.

1. A fine electret particle comprising, at least in the surface portion of the particle, an electret resin and a polymeric dispersant, the electret resin being a fluorine-containing resin and being electretized by electron ray irradiation, radial ray irradiation, or corona discharge treatment.

2. The fine electret particle according to item 1, which is in the form of a core-shell fine electret particle comprising a core part and a shell part,
the core part containing a material that has an ability to disperse a pigment, the shell part containing the electret resin and the polymeric dispersant, and the electret resin being a fluorine-containing resin and being electretized by electron ray irradiation, radial ray irradiation, or corona discharge treatment.

3. The fine electret particle according to item 1 or 2, wherein the electret resin is a fluorine-containing resin having a percent fluorine substitution of 10% or more.

4. The fine electret particle according to any one of items 1 to 3, wherein the electret resin is a vinylidenefluoride-hexafluoropropylene-tetrafluoroethylene terpolymer.

5. The fine electret particle according to any one of items 2 to 4, wherein the material that has an ability to disperse a pigment is a resin.

6. The fine electret particle according to any one of items 1 to 5, wherein the fine electret particle has a mean particle diameter of 1,000 μm or less.

7. The fine electret particle according to item 1, which is in the form of a core-shell fine electret particle comprising a core part and a shell part,
wherein the core part contains a pigment having a mean particle diameter of 0.02 to 0.2 μm and a resin that has an ability to disperse the pigment, and the shell part contains the electret resin and the polymeric dispersant, the electret resin being a vinylidenefluoride-hexafluoropropylenetetrafluoroethylene terpolymer and being electretized by electron ray irradiation, radial ray irradiation, or corona discharge treatment, and
wherein the fine electret particle has a mean particle diameter of 1,000 μm or less.

8. A process for producing fine electret particles, the process comprising: forming particles containing, at least in the surface portion of the particles, a resin for electretization and a polymeric dispersant; and subjecting the fine particles to electron ray irradiation, radial ray irradiation, or corona discharge treatment.

9. The process according to item 8, wherein the electron ray irradiation, radial ray irradiation, or corona discharge treatment is carried out while the fine particles are being dispersed in an electrophoretic medium.

10. The process according to item 8, for producing core-shell fine electret particles, the process comprising:

forming core-shell structures each comprising a core part containing a material that has an ability to disperse a pigment, and a shell part containing a fluorine-containing resin as the resin for electretization and the polymeric dispersant; and
subjecting the core-shell structures to electron ray irradiation, radial ray irradiation, or corona discharge treatment.

11. The process according to item 10, wherein the electron ray irradiation, radial ray irradiation, or corona discharge treatment is carried out while the core-shell structures are being dispersed in an electrophoretic medium.

The following describes the fine electret particles of the present invention and the process for producing the fine electret particles.
A fine electret particle according to the present invention comprises, at least in the surface portion of the particle, an electret resin and a polymeric dispersant, and the electret resin is a fluorine-containing resin and electretized by electron ray irradiation, radial ray irradiation, or corona discharge treatment.
Because the fine electret particles of the present invention comprise, at least in the surface potion of the particles, a fluorine-containing resin as an electret resin and a polymeric dispersant, and are electretized by electron ray irradiation, radial ray irradiation, or corona discharge treatment, the fine electret particles can be uniformly electrified, and well dispersed in an electrophoretic medium, while exhibiting excellent electrophoretic properties. As long as the effect of electrification and dispersibility is produced, the portion containing a fluorine-containing resin and a polymeric dispersant

may be at least the surface portion of the fine electret particle. Thus, the present invention also includes an embodiment in which a fluorine-containing resin and a polymeric dispersant are present in the entire portion of the fine electret particle.

When coloring the fine electret particle, it is preferable to do so by dividing the particle into a core part and a shell part, and dispersing a pigment in the core part. Thus, the present invention also includes an embodiment in which a fine electret particle is a core-shell fine electret particle having a core part and a shell part, and the core part contains a material that has an ability to disperse a pigment, whereas the shell part contains a polymeric dispersant and an electret resin, which is a fluorine-containing resin, and is electretized by electron ray irradiation, radial ray irradiation, or corona discharge treatment.

The fine electret particle of the present invention comprises a core part in which a pigment can be dispersed, and is therefore useful as an electrophoretic particle used for a full-color electrophoretic display device. Further, the fine electret particle of the present invention comprises a shell part that contains a fluorine-containing resin as an electret resin and a polymeric dispersant, and that is electretized by electron ray irradiation, radial ray irradiation, or corona discharge treatment. Thus, the fine electret particle of the present invention is uniformly electrified, and well dispersed in an electrophoretic medium, while exhibiting excellent electrophoretic properties.

With regard to the fine electret particle comprising an electret resin and a polymeric dispersant at least in the surface portion of the particle, it is sufficient that the portion containing the fluorine-containing resin and the polymeric dispersant is at least the surface portion of the fine electret particle as long as the effect of electrification and dispersibility is produced. Thus, the present invention includes an embodiment in which a fluorine-containing resin and a polymeric dispersant are present in the entire portion of the fine electret particle. A core-shell fine electret particle of the present invention is another embodiment in which the fine electret particle is divided into the surface portion and the inner portion. The following describes in detail the core-shell fine electret particle, as well as the electret resin and the polymeric dispersant.

The core part contains a material that has an ability to disperse a pigment. Although the material that has an ability to disperse a pigment is not limited, a fluorine-containing compound is preferable because electret properties can be imparted to the core part, in which a pigment is dispersed, as well as to the shell part. Examples of fluorine-containing compounds include various known fluorine-containing resins, fluorine-containing oils, and fluorine-containing adhesives.

Examples of fluorine-containing resins include tetrafluoroethylene resins, straight-chain fluoropolyether compounds, tetrafluoroethylene-vinyl monomer copolymers, and polymerizable amorphous fluororesins.

Specific examples of tetrafluoroethylene resins include polymers of polytetrafluoroethylene (PTFE) or derivatives thereof represented by $FR_1C = CR_1R_2$, wherein $R_1$ = F or H and $R_2$ = F or H or Cl or any other element.

Specific examples of straight-chain fluoropolyether compounds include SIFEL3590-N, SIFEL2610, and SIFEL8470 (product names, all produced by Shin-Etsu Chemical Co., Ltd.).

Specific examples of tetrafluoroethylene-vinyl monomer copolymers include Zeffle (product name, produced by Daikin Industries, Ltd.).

Specific examples of polymerizable amorphous fluororesins include CYTOP (product name, produced by Asahi Glass Co., Ltd.).

Examples of fluorine-containing oils include perfluoropolyether oil and chlorotrifluoroethylene oligomer. Specific examples include perfluoropolyether oil (DEMNUM, product name, produced by Daikin Industries, Ltd.) and chlorotrifluoroethylene oligomer (DAIFLOIL, product name, produced by Daikin Industries, Ltd.).

Examples of fluorine-containing adhesives include ultraviolet-curable fluorinated epoxy adhesives, such as OPTODYNE (product name, produced by Daikin Industries, Ltd.).

Among the materials listed above, resins are preferably used as the material that has an ability to disperse a pigment.

Known resins, in addition to fluorine-containing resins, may also be used as the material that has an ability to disperse a pigment. Examples of known resins include acrylic resins, polystyrene resins, polyester resins, polyurethane resins, polyolefin resins (e.g., polyethylene, and polypropylene), chlorinated polyolefin resins, vinyl chloride-vinyl acetate copolymer resins, polyvinyl butyral resins, alkyd resins, petroleum resins, ketone resins, epoxy resins, melamine resins, silicone resins, cellulose derivatives, and rubber resins. Of these, acrylic resins, polystyrene resins, polyurethane resins, etc., are preferable.

Commercially available products that have been made into resin beads (colored or non-colored) in advance may also be used as these resins. Examples of acrylic resin beads include the TAFTIC series (product name, produced by Toyobo Co., Ltd.), Art Pearl GR series (product name, produced by Negami Chemical Industrial Co., Ltd.), Chemisnow MX series (product name, produced by Soken Chemical & Engineering Co., Ltd.), Rubcouleur series (product name, produced by Dainichiseika Color & Chemicals Mfg. Co., Ltd.), and Techpolymer MB series (product name, produced by Sekisui Chemical Co., Ltd.). Examples of polystyrene resin beads include the Techpolymer SBX series (product name, produced by Sekisui Chemical Co., Ltd.) and Chemisnow SX series (product name, produced by Soken Chemical & Engineering Co., Ltd.). Examples of polyurethane resin beads include the Art Pearl C series (product name, produced by Negami Chemical Industrial Co., Ltd.). Of these, acrylic resin beads, (Art Pearl GR series, product name, produced

by Negami Chemical Industrial Co., Ltd.), and polyurethane resin beads (Art Pearl C series, product name, produced by Negami Chemical Industrial Co., Ltd.) are particularly preferable.

The pigment to be dispersed in the core part is not limited, and known pigments can be used. Dispersion of a pigment in the core part enables production of colored fine electret particles, which are useful as a material for full-color electronic paper.

Examples of inorganic pigments include, but are not limited to, black pigments containing carbon as a main component, such as carbon black, lamp black, bone black, and botanical black; and white pigments, such as titanium oxide, zinc oxide, calcium carbonate, barium sulfate, and silicon oxide. White pigments are useful for production of white electrophoretic particles or for the adjustment of the specific gravity of the particles.

Examples of organic pigments include, but are not limited to, azo pigments such as β-naphthol-based pigments, naphthol AS-based pigments, acetoacetic acid-based pigments, aryl amide-based pigments, pyrazolone-based pigments, acetoacetic acid arylamide-based pigments, pyrazolone-based pigments, β-naphthol-based pigments, β-oxynaphthoic acid-based pigments (BON acid-based azo pigments), naphthol AS-based pigments, and acetoacetic acid allylide-based pigments; and polycyclic pigments, such as phthalocyanine-based pigments, anthraquinone-based (threne) pigments, perylene-based pigments, perinone-based pigments, indigo-based pigments, thioindigo-based pigments, quinacridone-based pigments, dioxazine-based pigments, isoindolinone-based pigments, quinophthalone-based pigments, metal complex pigments, methine-based pigments, azo methine-based pigments, and diketopyrrolopyrrole-based pigments. In addition, azine pigments, daylight fluorescent pigments (solid resin dye solution), hollow resin pigments, nitroso pigments, nitro pigments, natural pigments, and the like, may also be used.

Specific examples of commercially available products include Symuler Fast Yellow 4GO, Fastogen Super Magenta RG, Fastogen Blue TGR (DIC Corporation), Fuji Fast Red 7R3300E, and Fuji Fast Carmine 527 (Fuji Shikiso K.K.).

The mean particle diameter of the pigment is preferably 20 μm or less, more preferably 3 μm or less. In particular, by setting the mean particle diameter of the pigment to be within a range of 0.02 to 0.2 μm, the resulting fine electret particles can be easily colored with a see-through color. The lower limit of the mean particle diameter may be set to about 0.02 μm. The mean particle diameter may be smaller depending on the type of pigments. The mean particle diameter of the pigment in this specification is determined by diluting a dispersion of the target object with an appropriate sufficiently compatible dispersion medium, and measuring the median diameter using a dynamic light scattering particle size distribution measurement device (LB-550, produced by HORIBA).

The core part may consist of two components, i.e., the material that has an ability to disperse a pigment, and a pigment. It is also possible that the core part additionally comprises known additives, such as a dispersant and a stabilizer, if necessary. The core part comprises a pigment preferably in an amount of about 1 to 30 wt%, and more preferably about 5 to 20 wt%, although the amount is not limited thereto.

The core part may be formed of either a single spherical particle or an agglomeration of a plurality of spherical particles. Specifically, in one embodiment of the core-shell fine electret particle, the surface of the core part of a single spherical particle is covered with a shell part. In another embodiment of the invention, the circumference of the core part of an aggregate of a plurality of spherical particles is covered with a shell part. The particles forming the core part may also have a non-spherical shape such as polygon, as well as a spherical shape.

The shell part contains a fluorine-containing resin as an electret resin, and a polymeric dispersant. In the present invention, so as to be electretized, the electret resin in the shell part is subjected to electron ray irradiation, radial ray irradiation, or corona discharge treatment mentioned below. It is thereby possible to obtain uniformly electrified fine electret particles having excellent electrophoretic properties. Furthermore, the use of a polymeric dispersant in a combination with an electret resin provides a fine electret particle that is not only excellently electrified, but also excellently dispersed in an electrophoretic medium.

A fluorine-containing resin is used as the electret resin to achieve uniform and satisfactory electrification by electretizing the resin by electron ray irradiation, radial ray irradiation, or corona discharge treatment.

Examples of fluorine-containing resins include polytetrafluoroethylene (PTFE), polychlorotrifluoroethylene (PCTFE), polyvinylidene fluoride (PVDF), polyvinyl fluoride (PVF), and perfluoropolyether (PFPE). These can be used singly or in a combination of two or more. Their copolymers can also be used.

The PTFE mentioned above is represented by the following structural formula:

[Chem. 1]

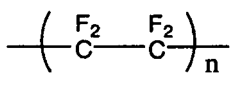

Here, the percent fluorine substitution of PTFE based on the hydrocarbon structure before fluorine substitution, i.e., $-(CH_2-CH_2)_n-$, is 100%. As used in this specification, "percent fluorine substitution" refers to the ratio of the number

of fluorine substitutions to the number of hydrogens bonded to the carbons in the structure before fluorine substitution: $-(CH_2-CH_2)_n-$, $-(CH_2-CH_2-CH_2-O)_n-$, or $-(CH_2-CH(CH_3))_n-$. The percent fluorine substitution is calculated using the following formula:

· Percent fluorine substitution (%) = {(the number of fluorines substituted for hydrogens)/(the number of hydrogens bonded to the carbon atoms in the structure of hydrocarbon before fluorine substitution)} x 100

Examples of PTFE include Polyflon PTFE (product name, produced by Daikin Industries, Ltd.), Teflon (registered trademark), and PTFE (product name, produced by Du Pont-Mitsui Fluorochemicals Company, Ltd.).
The PCTFE mentioned above is represented by the following structural formula:

[Chem. 2]

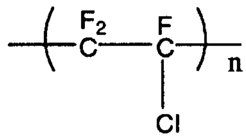

The percent fluorine substitution of PCTFE calculated by using the above formula is 75%.
Examples of PCTFE include Neoflon PCTFE (product name, produced by Daikin Industries, Ltd.).
The PVDF mentioned above is represented by the following structural formula:

[Chem. 3]

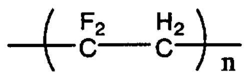

The percent fluorine substitution of PVDF calculated by using the above formula is 50%.
Examples of PVDF include KF polymer (product name, produced by Kureha Corporation), and Neoflon PVDF (product name, produced by Daikin Industries, Ltd.).
The PVF mentioned above is represented by the following structural formula:

[Chem. 4]

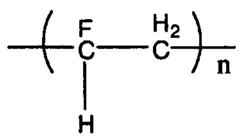

The percent fluorine substitution of PVF calculated by using the above formula is 25%.
Examples of PVF include Tedlar (product name, produced by Solvay Solexis Inc.).
The PFPE mentioned above is represented by the following structural formula:

[Chem. 5] $-(CF_2-CF_2-CF_2-O)_n-$

The percent fluorine substitution of PFPE calculated by using the above formula is 100%.
Examples of PFPE include DEMNUM (product name, produced by Daikin Industries, Ltd.).
Examples of copolymers containing, as a copolymer component, any one of the fluorine-containing resins described above include tetrafluoroethylene-perfluoroalkoxyvinylether copolymer (PFA), tetrafluoroethylene-hexafluoropropylene copolymer (FEP), tetrafluoroethylene-ethylene copolymer (ETFE) chlorotrifluoroethylene-ethylene copolymer (ECTFE), vinylidene fluoride-tetrafluoroethylene copolymer, and vinylidene fluoride-hexafluoropropylene-tetrafluoroethylene terpolymer. Of these copolymers, vinylidene fluoride-hexafluoropropylene-tetrafluoroethylene terpolymer is particularly preferable, because uniform and satisfactory electrification can be achieved.

The PFA mentioned above is represented by the following structural formula:

[Chem. 6]

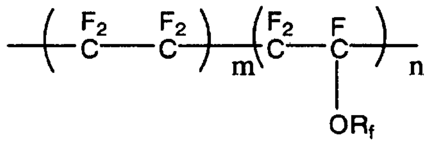

In the formula, $R_f$ is alkyl, and m and n represent the copolymerization rates of the respective units.

The tetrafluoroethylene unit has a percent fluorine substitution of 100%, and the perfluoroalkoxyvinylether unit has a percent fluorine substitution of 75%. Therefore, the percent fluorine substitution of PFA changes depending on the copolymerization rates m and n.

Examples of PFA include Teflon (registered trademark) PFA (product name, produced by Du Pont-Mitsui Fluorochemicals Company, Ltd.), Neoflon PFA (product name, produced by Daikin Industries, Ltd.), and Fluon PFA (product name, produced by Asahi Glass Co., Ltd.).

The FEP mentioned above is represented by the following structural formula:

[Chem. 7]

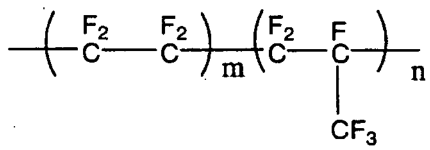

In the formula, m and n represent the copolymerization rates of the respective units.

The tetrafluoroethylene unit has a percent fluorine substitution of 100%, and the hexafluoropropylene unit has a percent fluorine substitution of 100%. The percent fluorine substitution of FEP is therefore 100%.

Examples of FEP include Neoflon FEP (product name, produced by Daikin Industries, Ltd.), Teflon (registered trademark) FEP (product name, produced by Du Pont-Mitsui Fluorochemicals Company, Ltd.), and Dyneon FEP (product name, produced by Sumitomo 3M Limited).

The ETFE mentioned above is represented by the following structural formula:

[Chem. 8]

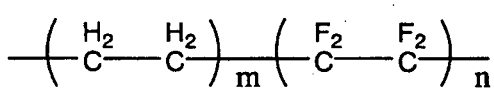

In the formula, m and n represent the copolymerization rates of the respective units.

The tetrafluoroethylene unit has a percent fluorine substitution of 100%, and the ethylene unit has a percent fluorine substitution of 0%. The percent fluorine substitution of ETFE thus changes depending on the copolymerization rates m and n.

Examples of ETFE include Fluon ETFE (product name, produced by Asahi Glass Co., Ltd.), Neoflon ETFE (product name, produced by Daikin Industries, Ltd.), and Dyneon ETFE (product name, produced by Sumitomo 3M Limited).

The ECTFE mentioned above is represented by the following structural formula:

[Chem. 9]

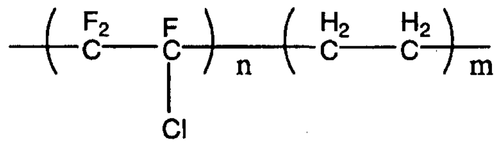

In the formula, m and n represent the copolymerization rates of the respective units.

The chlorotrifluoroethylene unit has a percent fluorine substitution of 75%, and the ethylene unit has a percent fluorine substitution of 0%. The percent fluorine substitution of ECTFE therefore changes depending on the copolymerization rates m and n.

Examples of ECTFE include Halar (product name, produced by Solvay Solexis Inc.).

A vinylidene fluoride-tetrafluoroethylene copolymer is obtained by copolymerization of the vinylidene fluoride unit (percent fluorine substitution: 50%) and the tetrafluoroethylene unit (percent fluorine substitution: 100%). The percent fluorine substitution of the vinylidene fluoride-tetrafluoroethylene copolymer changes depending on the copolymerization rates.

A vinylidenefluoride-hexafluoropropylene-tetrafluoroethylene terpolymer is obtained by copolymerization of the vinylidene fluoride unit (percent fluorine substitution: 50%), the hexafluoropropylene unit (percent fluorine substitution: 100%), and the tetrafluoroethylene unit (percent fluorine substitution: 100%). The percent fluorine substitution of the terpolymer changes depending on the copolymerization rates.

Examples of vinylidenefluoride-hexafluoropropylene-tetrafluoroethylene terpolymers include VT470 (product name, produced by Daikin Industries, Ltd.).

In the present invention, the fluorine-containing resins (including copolymers) listed above each have a percent fluorine substitution of preferably 10% or more, more preferably 20% or more, and most preferably 25 to 100%.

In the present invention, the content of the electret resin in the fine electret particle is not limited. However, the fine electret particle contains the electret resin preferably in an amount of 10 to 50 wt%, and more preferably 20 to 30 wt%, from the standpoint of the balance between electrification and dispersibility of the fine electret particle.

The polymeric dispersant basically refers to a surfactant having a molecular weight of 10,000 or more, which is also known as a polymeric surfactant or a polymeric emulsifier (see Shinban Kobunshi Jiten (edited by the Society of Polymer Science), Asakura Shoten, first edition published November 25, 1988).

In the present invention, it is preferable to use as a polymeric dispersant, for example, at least one member selected from the group consisting of acrylic-based dispersants, urethane-based dispersants, silicone-based dispersants, and polyaminoamide-based dispersants. When contained, these dispersants efficiently inhibit the aggregation of the fine electret particles, thereby enhancing the dispersibility, even in an electrophoretic medium, in which aggregation usually occurs easily because of the water and oil repellency of the electret resin (the fluorine-containing resin) when only the electret resin is contained.

Examples of acrylic-based dispersants include the Joncryl series (Joncryl 67, 586, 611, 678, 680, 682, 683, and 690, product name, produced by BASF), Hi-Ros Series (Hi-Ros X-1, YS-1274, VS-1047, 1063, 1191, and 1193, product name, produced by Seiko PMC Corporation), and DISPERBYK series (DISPERBYK-116, 2000, 2001, 2008, 2009, 2020, 2022, 2025, 2050, and 2070, product name, produced by BYK).

Examples of urethane-based dispersants include the DISPERBYK series (DISPERBYK-2163, 2164, 182, 2155, 184, and 160, product name, manufacture by BYK), and the Solsperse series (Solsperse-76500 and 55000, product name, produced by Lubrizol).

Examples of silicone-based dispersants include the BYK series (BYK-300, 301, 302, 310, 315, 370, 378, and 3550, product name, produced by BYK).

Examples of polyaminoamide-based dispersants include the Anti-Terra-U series (Anti-Terra-U, U100, 204, and 205, product name, produced by BYK) and the DISPERBYK-101 (product name, produced by BYK).

Besides the dispersants listed above, other dispersants (e.g., the DISPERBYK series produced by BYK and the SolSparse series produced by Lubrizol) can also be used.

In the present invention, the content of the polymeric dispersant in the fine electret particle is not limited. However, the fine electret particle contains the polymeric dispersant preferably in an amount of 0.5 to 20 wt%, and more preferably 5 to 10 wt%, from the standpoint of the balance between electrification and dispersibility of the fine electret particle.

The shell part may consist only of an electret resin and a polymeric dispersant. It is also possible for the shell part to additionally comprise known additives, such as a pigment derivative and a stabilizer, if necessary. Although the thickness of the shell part is not limited, the thickness is preferably uniform so that the shell part is uniformly electrified.

The fine electret particle comprising a core part and a shell part preferably has a mean particle diameter of

1,000 μm or less. In particular, the mean particle diameter is preferably 0.02 to 1,000 μm. The weight ratio of the core part to the shell part is not limited; the weight ratio of the core part:shell part is preferably 50:50 to 90:10, and more preferably 70:30 to 80:20. The fine electret particle having a single structure, which is described at the beginning of this specification, also has a mean particle diameter of preferably 1,000 μm or less, and particularly preferably 0.02 to 1,000 μm, as does the core-shell fine electret particle.

The fine electret particles of the present invention are electretized by electron ray irradiation, radial ray irradiation, or corona discharge treatment. Electretization by means of electron ray irradiation, radial ray irradiation, or corona discharge treatment makes the fluorine-containing resin contained as the electret resin serve as a trap. For this reason, it is possible to obtain fine electret particles that have a semipermanent negative charge. The conditions for electretization are described below in the section on the production process.

<u>Fine Electret Particle Production Process</u>

The process for producing the above-described fine electret particles is not limited. In the present invention, fine particles containing a resin for electretization and a polymeric dispersant at least in the surface portion of the particles are formed, and the formed fine particles are then subjected to electron ray irradiation, radial ray irradiation, or corona discharge treatment. Fine electret particles can thereby be suitably produced.

In the process for producing the core-shell fine electret particles, core-shell structures each comprising a core part containing a material that has an ability to disperse a pigment and a shell part containing a fluorine-containing resin as a resin for electretization and a polymeric dispersant are formed. The formed core-shell structures are then subjected to electron ray irradiation, radial ray irradiation, or corona discharge treatment. Fine electret particles can thereby be suitably produced. This core-shell fine electret particle production process (referred to as "production process of the present invention") is described below as a representative example of processes for producing fine electret particles.

In the production process of the present invention, the core part and the shell part are as described above. The method for forming the core-shell structures is not limited. For example, known core-shell polymerization may be used to form the core-shell structures.

One example of the procedure for forming the core-shell structures using core-shell polymerization is described below:

(1) step 1: stirring a material that has an ability to disperse a pigment with a pigment to prepare a pigment dispersion;
(2) step 2: adding a resin for electretization and a polymeric dispersant to the pigment dispersion, and stirring the resulting liquid mixture;
(3) step 3: adding a curing agent or a polymerization initiator to the liquid mixture, and stirring the resulting mixture;
(4) step 4: adding the mixture obtained in (3) to a stirred aqueous phase containing an emulsifier, and stirring the resulting mixture to form core-shell structures.

In the formation of core-shell structures described above, stirring may be performed by using a known mixing device, such as a mixer, a homogenizer, and a dissolver. In the procedure above, the reaction is controlled so that curing and polymerization of the core-shell structures are initiated by performing heating and stirring in step 4, and not initiated in the preceding steps. Further, pulverization of the pigment into fine particles may be performed using a ball mill or bead mill. The stirring conditions are preferably adjusted so that the resulting fine electret particles have a mean particle diameter of 1,000 μm or less.

Examples of the emulsifiers include, but are not limited to, polyvinyl alcohol and ethylene maleic anhydride.

Additionally, the fine electret particles may also be produced by using colored or color-free resin beads (e.g., acrylic resin beads, polystyrene resin beads, polyurethane resin beads) as the core part, and covering the surface of each resin bead with a shell part containing a fluorine-containing resin and a polymeric dispersant.

The obtained core-shell structures can be electretized in the form of a suspension as is, or once the core-shell structures have been separated as powder or the powder has been dispersed in an electrophoretic medium, by subjecting the structures to electron ray irradiation, radial ray irradiation, or corona discharge treatment. This also applies to the process for producing the fine electret particles having a single structure. The conditions for electron or radial ray irradiation and corona discharge treatment are not limited, insofar as the core-shell structure is electretized. For example, the irradiation may be conducted by emitting an electron ray of about 10 to 50 kGy using an electron beam accelerator. Radial ray irradiation may be performed, for example, by emitting a gamma ray of about 1 to 15 kGy.

The electrophoretic medium used in this specification is not limited, and examples include air and liquid media. Examples of liquid media include ethylene glycol (EG), propylene glycol (PG), glycerin, silicone oils, fluorine-containing oils, and petroleum oils. Examples of the silicone oils include dimethyl silicone oil. Examples of fluorine-containing oils include perfluoropolyether oil.

In this manner, in a suitable embodiment, highly uniform fine electret particles of 1,000 μm or less can be

efficiently obtained. In the production process of the present invention, fine electret particles that have a highly uniform particle diameter and that are almost all charged (negatively charged) to a certain level or more can be easily produced at a high yield.

The fine electret particles undergo electrophoresis by being placed between electrode plates and having an external voltage applied between the electrode plates. The electrophoretic medium used in this is not limited, and air, liquid media, and the like can be used. Examples of liquid media include ethylene glycol (EG), propylene glycol (PG), glycerin, silicone oils, fluorine-containing oils, and petroleum oils. Examples of silicone oils include dimethyl silicone oil. Examples of fluorine-containing oils include, in particular, perfluoropolyether oil. Silicone oils are particularly preferred among these media. In the present invention, because the fine electret particles contain a polymeric dispersant as well as an electret resin, the fine electret particles can be well dispersed in such media.

Electrophoretic Display Device

The fine electret particles are colored (preferably with a see-through color) with a pigment. The colored fine electret particles may be used as charged particles for an electrophoretic color display device that displays a color image. For example, a suitable electrophoretic color display device to which the fine electret particles are applied as charged particles comprises: a plurality of display units for individually displaying pixels; first electrodes; and second electrodes; the display units being arranged in a matrix form and each having cells with at least three layers, the cells containing charged particles; each of the first electrodes being provided on the upper or lower surface of each cell; each of the second electrodes being provided on the side edge of each cell; and the charged particles having different colors for every cell in each display unit.

In the electrophoretic display device above, each pixel has a display unit containing cells with at least three layers. Since each of the cells contains charged particles of different colors, a single pixel can display various colors by having a voltage applied across the first and second electrodes. Thus, no unused pixels are present in the image range during color image display. In the present invention, the colors for the three or more cells (a different color for each cell) are not limited. Red (R), green (G), and blue (B) are preferable to make a full color display possible by the additive color mixture without using a color filter. In the present invention, the "side edge of each cell" refers to the upper peripheral edge, lower peripheral edge, and side of each cell.

The present invention is specifically described below with reference to example drawings.

As shown in Fig. 1, an electrophoretic display device 1 comprises a plurality of display units 2. Each display unit 2 has first to third cells 5a to 5c, and each of the cells is provided with a first electrode 3 and a second electrode 4 inside thereof.

Each of the pixels for forming an image is provided with a display unit 2 having first to third cells 5a to 5c that are laminated vertically, as shown in Fig. 1. The first to third cells 5a to 5c are made of a transparent material such as glass or polyethylene terephthalate so that light can pass through. The bottom of each cell is provided with a base 7 for supporting the first electrode 3 and the second electrode 4. A reflector for reflecting light passing through the display unit 2, or a white board or black board that serves as the background color of an image, may be provided below the third cell 5c. Further, a shielding means may be provided on the upper peripheral edge of the first cell 5a so as to shield first to third charged particles 6a to 6c (described below) when the first to third charged particles 6a to 6c are accumulated on the second electrode 4.

As shown in Fig. 1, each of the first to third cells 5a to 5c is internally provided with the first electrode 3 and the second electrode 4 for collecting the first to third charged particles 6a to 6c (described below). The second electrode 4 is provided over the entire circumference of the inner side of each of the first to third cells 5a to 5c. The first electrode 3 is located on the bottom of each of the first to third cells 5a to 5c on the inner side of the second electrode 4 so that short circuiting between the first electrode 3 and the second electrode 4 is prevented. The first electrode 3 can have various forms, such as a plate, stripes, a lattice, or dots. The material of the first electrode 3 and the second electrode 4 is not particularly limited. For example, a highly conductive metal, such as copper or silver, a transparent conductive resin, an ITO (indium tin oxide) film, or the like can be used.

Moreover, as shown in Fig. 1, the first cell 5a contains the first charged particles 6a, which are colored red (R), the second cell 5b contains the second charged particles 6b, which are colored green (G), and the third cell 5c contains the third charged particles 6c, which are colored blue (B). Further, each of the first to third cells 5a to 5c is filled with an electrophoretic medium for electrophoresing the first to third charged particles 6a to 6c.

Next, the operation of the electrophoretic display device 1 mentioned above is described with reference to Figs. 2 and 3. In Fig. 2, first to third cells 5a to 5c are collectively referred to as "cell 5," and first to third charged particles are collectively referred to as "charged particles 6."

When the electrophoretic display device 1 is to display red in a specific pixel, voltages are applied to the first electrode 3 and the second electrode 4 so that the first electrode 3 is positive and the second electrode 4 is negative in the first cell 5a, which contains the red-colored (R) first charged particles 6a. As a result, the first charged particles 6a

are attracted to the first electrode 3 and located on the bottom of the first cell 5a (Fig. 2 (a)). Conversely, when voltages are applied to the first electrode 3 and the second electrode 4 so that the first electrode 3 is negative and the second electrode 4 is positive in the second and third cells 5a and 5b, the second and third charged particles 6b and 6c are attracted to the second electrode 4 and located on the inner side of the second and third cells 5a and 5b (Fig. 2 (b)). When the display unit 2 in this state is observed from above, only the color of the first charged particles 6a (red) is perceived. The colors of the second charged particles 6b (green) and third charged particles 6c (blue) cannot be perceived because these particles are hidden behind the second and third cells 5b and 5c, the second electrode 4, or the shielding means. Thus, the pixel displays red (Fig. 3 (a)).

Further, in order to display green in a specific pixel, the first electrode 3 is made positive and the second electrode 4 is made negative in the second cell 5b so that the second charged particles 6b are moved to the bottom of the second cell 5b (Fig. 2 (a)). In the first and third cells 5a and 5c, the first electrode 3 is made negative and the second electrode 4 is made positive so that the first and third charged particles 6a and 6c are moved to the inner side of the first and third cells 5a and 5c (Fig. 2 (b)). When the display unit 2 in this state is observed from above, only the color of the second charged particles 6b (green) is perceived. The colors of the first charged particles 6a (red) and third charged particles 6c (blue) cannot be perceived because these particles are hidden behind the first and third cells 5a and 5c, the second electrode 4, or the shielding means. Thus, the pixel displays green (Fig. 3 (b)).

Likewise, in order to display blue in a specific pixel, the first electrode 3 is made positive and the second electrode 4 is made negative in the third cell 5c so that the third charged particles 6c are moved to the bottom of the third cell 5c (Fig. 2 (a)). In the first and second cells 5a and 5b, the first electrode 3 is made negative while the second electrode 4 is made positive so that the first and second charged particles 6a and 6b are moved to the inner side of the first and second cells 5a and 5b (Fig. 2 (b)). When the display unit 2 in this state is observed from above, only the color of the third charged particles 6c (blue) is perceived. The colors of the first charged particles 6a (red) and second charged particles 6b (green) cannot be perceived because these particles are hidden behind the first and second cells 5a and 5b, the second electrode 4, or the shielding means. Thus, the pixel displays blue (Fig. 3 (c)).

In addition, in order to display white in a specific pixel, the values of the voltage to be applied to the first electrode 3 and the second electrode 4 are adjusted so that the first to third charged particles 6a to 6c are dispersed in the first to third cells 5a to 5c (Fig. 3 (d)). When the display unit 2 in this state is observed from above, the colors of the first to third charged particles 6a to 6c are presented as an additive color mixture. Thus, the pixel color is white.

As described above, in the electrophoretic display device 1, the display units 2, each corresponding to a single pixel, comprise the first to third cells 5a to 5c, which are laminated. The first to third charged particles 6a to 6c are made to move inside the first to third cells 5a to 5c, thereby allowing a single pixel to display various colors. Accordingly, unused pixels, which do not contribute to image display, are not present in the image range. Consequently, a full-color image can be displayed without using a color filter.

## Advantageous Effects of Invention

The fine electret particles of the present invention contain, at least in the surface portion of the particles, a fluorine-containing resin as an electret resin and a polymeric dispersant, and are electretized by electron ray irradiation, radial ray irradiation, or corona discharge treatment. Thus, the fine electret particles can uniformly electrified, and well dispersed in an electrophoretic medium, while exhibiting excellent electrophoretic properties. The core-shell fine electret particles, in particular, are useful as electrophoretic particles used for a full-color electrophoretic display device, because a pigment can be dispersed in the core part. Further, because the shell part contains a fluorine-containing resin as an electret resin and a polymeric dispersant, and is electretized by electron ray irradiation, radial ray irradiation, or corona discharge treatment, the core-shell fine electret particles can be uniformly electrified, and well dispersed in an electrophoretic medium, while exhibiting excellent electrophoretic properties.

## Brief Description of Drawings

Fig. 1 is a front cross-sectional schematic view of an electrophoretic display device (an example).
Fig. 2 is a perspective view showing movement of charged particles in an electrophoretic display device (an example).
Fig. 3 is a front cross-sectional schematic view showing operation of an electrophoretic display device (an example).
Fig. 4 shows an upper view and a lateral cross-sectional view of an electrophoresis test device used in the Examples and Comparative Examples.

Description of Embodiments

The present invention is described below in more detail with reference to the Preparation Examples and Test Examples. The present invention is, however, not limited to these Preparation Examples and Test Examples.

Examples 1 to 5 and Comparative Examples 1 to 5

The following were used as starting materials for producing fine electret particles. Table 1 shows the specific formulation.

A. VT470 (fluorine-containing resin: shell-part material)
B. Dispersibility-improving resin (i.e., polymeric dispersant, three types shown in Table 1)
C. Urethane resin beads
D. Acrylic resin beads
E. PVA224 (starting material for an emulsifier)

Fine electret particles were prepared according to the following procedure.
A fluororesin (VT470) was dissolved in ethyl acetate to a concentration of 5%, and a dispersibility-improving resin was dissolved in the ethyl acetate to a concentration of 2%. Resin beads C and D were individually mixed with the respective solutions with stirring.
PVA224 was dissolved in ion-exchange water to a concentration of 5% to obtain an emulsifier. The resin-bead-mixed dispersion was weighed (200 g) and stirred at 2,000 rpm using a homomixer. The emulsifier (50 g) obtained above was added to this mixed dispersion under stirring, and the resulting mixture was emulsified by stirring using a homomixer at 6,000 rpm for 6 minutes. The emulsion was stirred with a propeller in a warm bath at 50 to 80°C. Stirring conditions: 3 hours at 600 rpm.
The slurry after stirring was diluted with ion-exchange water, and solid-liquid separation was performed using a centrifuge. The precipitate was washed repeatedly, four times. The precipitate after washing was dried in an incubator at 50°C and ground to thereby obtain fine electret particles.

Test Example 1 (Electrophoresis Test)

An electrophoresis test was conducted on the fine electret particles obtained in Examples 1 to 5 and Comparative Examples 1 to 3 using the electrophoresis test device shown in Fig. 4. Specifically, the test was conducted as follows.
An ITO-coated glass sheet produced by Kuramoto Co., Ltd. (300 mm (height) × 400 mm (width) × 0.7 mm (thickness), 7 Ω/sq or less) was cut into 30 mm × 50 mm pieces. Sumitomo 3M double-sided adhesive tape (Scotch super-strength double-sided adhesive tape, 19 mm (width) × 4 m (length) × 1 mm (thickness)) was cut into 20-mm pieces, and an 8-mm-diameter hole was made in the central portion of the pieces.
The 20-mm adhesive tape was attached somewhat left of the center of the ITO-coated glass surface.
The hole in the double-sided adhesive tape was filled with the fine electret particles in an amount without overflow
The liner was peeled off from the other side of the double-sided adhesive tape, i.e., the side not attached to the glass surface, and a 30 mm × 50 mm piece of the ITO-coated glass sheet was placed on that side of the adhesive tape. To allow portions to be clipped with a crocodile clip, the positions of the two pieces of glass were staggered, as shown in the lateral view of Fig. 4. The two ITO-coated surfaces had an interval corresponding to the thickness of the double-sided adhesive tape (1 mm).
The double-sided adhesive tape between the two pieces of glass was pricked with a syringe (Nipro) containing silicone oil (Shin-Etsu Chemical Co., Ltd), and the hole in the adhesive tape was filled with silicone oil.
Two pieces of the ITO-coated glass sheet were connected at their edges with a crocodile clip, and a voltage was applied from an external power supply (HJPM-5R0.6 high-pressure power supply, Matsusada Precision Inc.) to test the fine electret particles for their electrophoretic properties.
Table 1 shows the evaluation results of the electrophoretic properties of the fine electret particles.

Test Example 2 (Dispersibility Test)

A dispersibility test was conducted on the fine electret particles obtained in Examples 1 to 5 and Comparative Examples 1 to 3. Specifically, the test was conducted as follows.
KF96-1CS silicone oil (Shin-Etsu Chemical Co., Ltd) and Isopar G (ExxonMobil Chemical) were provided for use as an electrophoretic medium. The fine electret particles of the Examples were individually added to the respective electrophoretic media, and the mixtures were fully stirred with a spatula to obtain dispersions.

Subsequently, a drop of each of the dispersion liquids was sucked up with a dropper and individually placed on a microscopic glass slide. A cover glass was placed over each of the glass slides, and samples for observation were thereby prepared.
The samples were observed under magnification using an optical microscope to evaluate the dispersibility of the fine particles.
Table 1 shows the evaluation results of the dispersibility of the fine electret particles of each Example.

Table 1

| Formulation of the Particles (solvent not shown) | | | | | | | | | | |
|---|---|---|---|---|---|---|---|---|---|---|
| Formulation | | | Example | | | | | Comparative Example | | |
| | | | 1 | 2 | 3 | 4 | 5 | 1 | 2 | 3 |
| Core Part | Urethane Resin Bead: Art Pearl C800 | | 75.00 | | 75.00 | 75.00 | 75.00 | 75.00 | 75.00 | 100.00 |
| | Acrylic Resin Bead: Art Pearl GR800 | | | 75.00 | | | | | | |
| | | | | | | | | | | |
| | | | | | | | | | | |
| Shell Part | Resin for Electretization | Fluororesin: Neoflon VT470 | 20.00 | 20.00 | 20.00 | 20.00 | 20.00 | 25.00 | | |
| | Dispersibility-improving Resin | Acrylic-based: Joncryl678 | 5.00 | 5.00 | | | | | 25.00 | |
| | | Urethane-based: Solsperse 76500 | | | 5.00 | | | | | |
| | | Silicon-based: BYK3550 | | | | 5.00 | | | | |
| | | Polyaminoamide-based: Anti-Terra-U100 | | | | | 5.00 | | | |
| Total | | | 100.0 | 100.0 | 100.0 | 100.0 | 100.0 | 100.0 | 100.0 | 100.0 |
| Electrophoretic Properties Evaluation | | | Good | Good | Good | Good | Good | Good | Bad | Bad |
| Dispersibility Evaluation | | Silicone Oil KF96-1CS | Good | Good | Good | Good | Good | Bad | Good | Good |
| | | Isopar G | Good | Good | Good | Good | Good | Bad | Good | Good |

Explanation of Reference Numerals

1. Electrophoretic display device
2. Display unit
3. First electrode
4. Second electrode

5a-5c. First to third cells

6a-6c. First to third charged particles

## Claims

1. A fine electret particle comprising, at least in the surface portion of the particle, an electret resin and a polymeric dispersant, the electret resin being a fluorine-containing resin and being electretized by electron ray irradiation, radial ray irradiation, or corona discharge treatment.

2. The fine electret particle according to claim 1, which is in the form of a core-shell fine electret particle comprising a core part and a shell part,
the core part containing a material that has an ability to disperse a pigment, the shell part containing the electret resin and the polymeric dispersant, and the electret resin being a fluorine-containing resin and being electretized by electron ray irradiation, radial ray irradiation, or corona discharge treatment.

3. The fine electret particle according to claim 1 or 2, wherein the electret resin is a fluorine-containing resin having a percent fluorine substitution of 10% or more.

4. The fine electret particle according to any one of claims 1 to 3, wherein the electret resin is a vinylidenefluoride-hexafluoropropylene-tetrafluoroethylene terpolymer.

5. The fine electret particle according to any one of claims 2 to 4, wherein the material that has an ability to disperse a pigment is a resin.

6. The fine electret particle according to any one of claims 1 to 5, wherein the fine electret particle has a mean particle diameter of 1,000 μm or less.

7. The fine electret particle according to claim 1, which is in the form of a core-shell fine electret particle comprising a core part and a shell part,
wherein the core part contains a pigment having a mean particle diameter of 0.02 to 0.2 μm and a resin that has an ability to disperse the pigment, and the shell part contains the electret resin and the polymeric dispersant, the electret resin being a vinylidenefluoride-hexafluoropropylene-tetrafluoroethylene terpolymer and being electretized by electron ray irradiation, radial ray irradiation, or corona discharge treatment, and
wherein the fine electret particle has a mean particle diameter of 1,000 μm or less.

8. A process for producing fine electret particles, the process comprising: forming particles containing, at least in the surface portion of the particles, a resin for electretization and a polymeric dispersant; and subjecting the fine particles to electron ray irradiation, radial ray irradiation, or corona discharge treatment.

9. The process according to claim 8, wherein the electron ray irradiation, radial ray irradiation, or corona discharge treatment is carried out while the fine particles are being dispersed in an electrophoretic medium.

10. The process according to claim 8, for producing core-shell fine electret particles, the process comprising:
forming core-shell structures each comprising a core part containing a material that has an ability to disperse a pigment, and a shell part containing a fluorine-containing resin as the resin for electretization and the polymeric dispersant; and
subjecting the core-shell structures to electron ray irradiation, radial ray irradiation, or corona discharge treatment.

11. The process according to claim 10, wherein the electron ray irradiation, radial ray irradiation, or corona discharge

treatment is carried out while the core-shell structures are being dispersed in an electrophoretic medium.

Fig.1

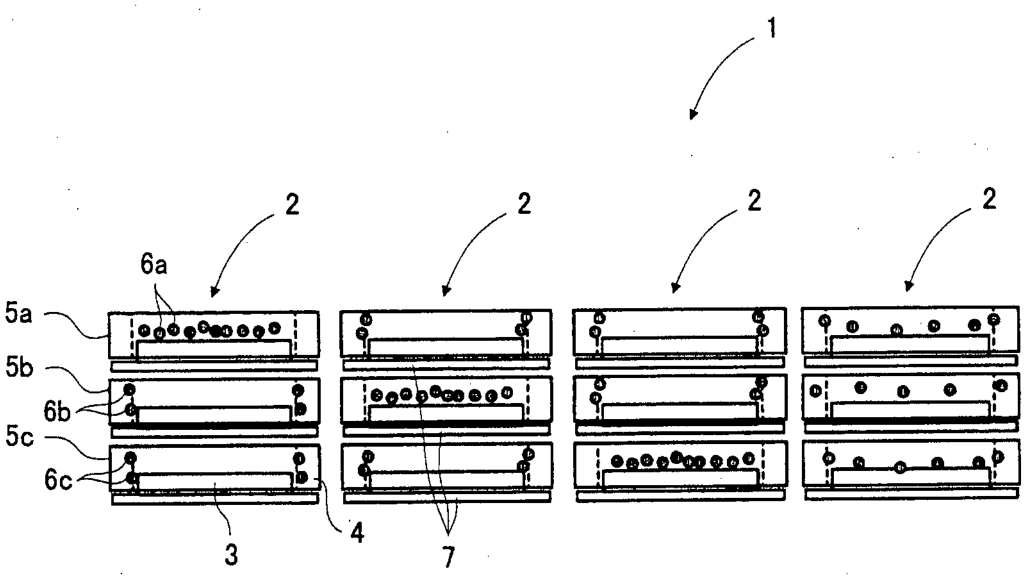

Fig.2

(a)

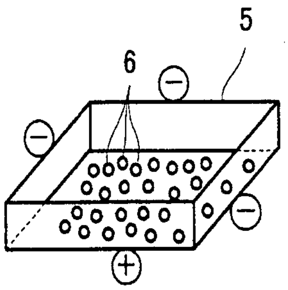


(b)

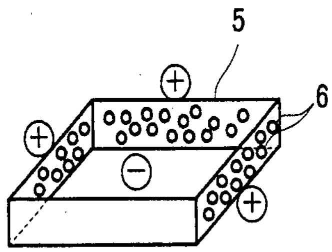

Fig.3

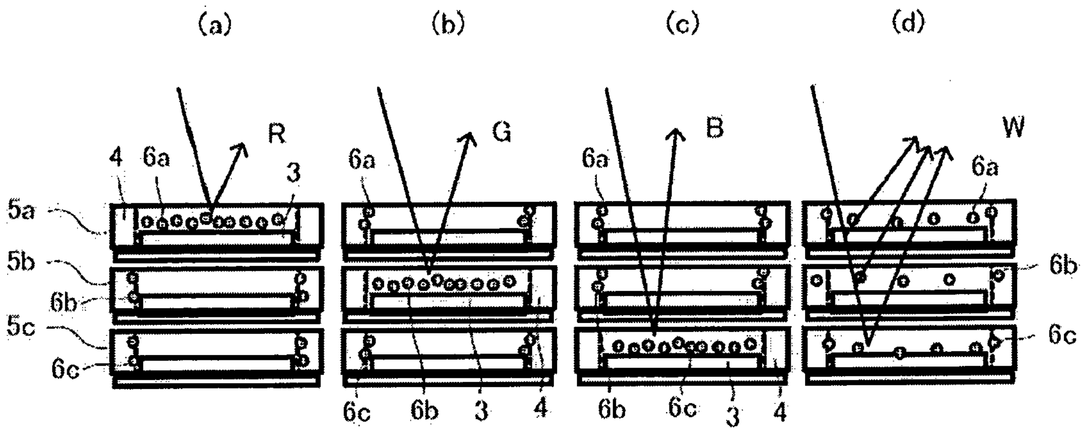
(a)
(b)
(c)
(d)
R
G
B
W
4
6a
3
5a
5b
6b
5c
6c
6a
6a
6a
6b
6c
6c
6b
3
4
6b
6c
3
4

Fig.4

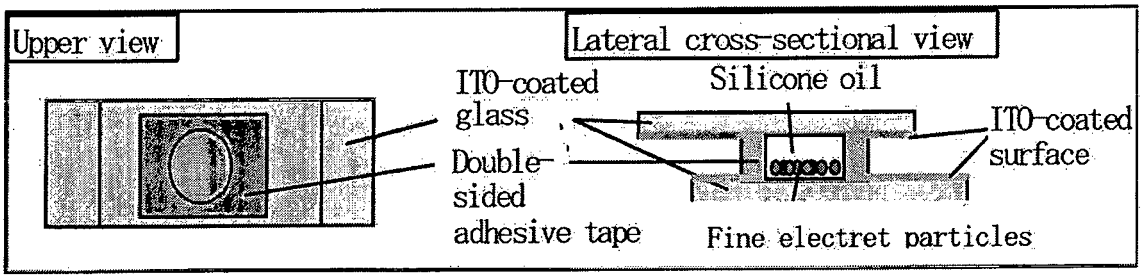
Upper view
Lateral cross-sectional view
ITO-coated glass
Silicone oil
ITO-coated surface
Double-sided adhesive tape
Fine electret particles

**INTERNATIONAL SEARCH REPORT**

International application No. PCT/JP2013/057966

A. CLASSIFICATION OF SUBJECT MATTER
*G02F1/167*(2006.01)i, *C08J3/12*(2006.01)i, *C08J3/28*(2006.01)i, *G02F1/17*(2006.01)i

According to International Patent Classification (IPC) or to both national classification and IPC

B. FIELDS SEARCHED

Minimum documentation searched (classification system followed by classification symbols)
G02F1/167, C08J3/12, C08J3/28, G02F1/17

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,A | JP 4903907 B1 (Sakura Color Products Corp.), 28 March 2012 (28.03.2012), claim 1; paragraphs [0010], [0033] & WO 2012/157452 A | 1-11 |
| A | JP 2006-293027 A (Canon Inc.), 26 October 2006 (26.10.2006), paragraph [0028] (Family: none) | 1-11 |
| A | JP 2010-20220 A (Ricoh Co., Ltd.), 28 January 2010 (28.01.2010), paragraphs [0049] to [0051] (Family: none) | 1-11 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>16 April, 2013 (16.04.13) | Date of mailing of the international search report<br>23 April, 2013 (23.04.13) |
| Name and mailing address of the ISA/<br>Japanese Patent Office<br>Facsimile No. | Authorized officer<br><br>Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005031189 A
- JP 2007206570 A